Europäisches Patentamt

European Patent Office

Office européen des brevets

(19)

(11) Veröffentlichungsnummer : **0 041 625**
**B1**

(12) **EUROPÄISCHE PATENTSCHRIFT**

(45) Veröffentlichungstag der Patentschrift :
**02.05.84**

(21) Anmeldenummer : **81103641.7**

(22) Anmeldetag : **12.05.81**

(51) Int. Cl.³ : **G 01 F   1/32**

(54) **Elektronische Schaltungsanordnung für die Aufbereitung der aus der Wirbelfolge einer Karmanschen Wirbelstrasse abgeleiteten Messwerte.**

(30) Priorität : **06.06.80 DE 3021897**

(43) Veröffentlichungstag der Anmeldung :
**16.12.81 Patentblatt 81/50**

(45) Bekanntmachung des Hinweises auf die Patenterteilung : **02.05.84 Patentblatt 84/18**

(84) Benannte Vertragsstaaten :
**BE FR GB IT LU NL SE**

(56) Entgegenhaltungen :
**GB-A- 2 020 022**
**US-A- 3 881 352**
**US-A- 4 164 143**
**US-A- 4 173 143**

(73) Patentinhaber : **AUERGESELLSCHAFT GMBH**
**Thiemannstrasse 1-11**
**D-1000 Berlin 44 (DE)**

(72) Erfinder : **Beck, Martin**
**Strandallee**
**D-2890 Nordenham (DE)**
Erfinder : **Höht, Wolfgang**
**Bohm-Schuch-Weg 15**
**D-1000 Berlin 47 (DE)**
Erfinder : **Mushold, Udo**
**Eichhornstrasse 5a**
**D-1000 Berlin 30 (DE)**

EP 0 041 625 B1

## Elektronische Schaltungsanordnung für die Aufbereitung der aus der Wirbelfolge einer Karmanschen Wirbelstraße abgeleiteten Meßwerte

Die Erfindung betrifft eine elektronische Schaltungsanordnung für die Aufbereitung der aus der Wirbelfolge einer Karmanschen Wirbelstraße abgeleiteten Meßwerte nach dem Oberbegriff des Anspruchs 1.

Für die Messung von durch eine Karmansche Wirbelstraße hervorgerufenen Wirbeln ist es bekannt, einen Ultraschallsender und einen -empfänger an der von dem zu messenden Strömungsmittel durchströmten Leitung einander gegenüberliegend anzuordnen, so daß die vom Sender abgestrahlte Ultraschallwelle durch die Wirbel der Karmanschen Wirbelstraße moduliert und dann vom Ultraschallempfänger empfangen und durch eine Auswertschaltung ausgewertet, einem Strömungsgeschwindigkeits-Überwachungsgerät zugeführt wird (GB-A-2 020 022).

Davon ausgehend, liegt der Erfindung die Aufgabe zugrunde, eine elektronische Schaltungsanordnung zuschaffen, bei der die durch die Karmansche Wirbelstraße hervorgerufene und durch Ultraschall abgetastete Wirbelfolge sowohl digital für einen Mikrocomputer als auch analog zum Anschluß eines Zweikanal-Linienschreibers elektronisch aufbereitet werden kann.

Das Problem bei dieser Aufgabenstellung besteht darin, daß die vom Sender ausgehende Sendefrequenz beim Durchgang der durch die Karmansche Wirbelstraße hervorgerufenen geordneten Wirbelfolge Intensitätsänderungen unterworfen ist und am Ausgang zum am Meßwertaufnehmer anzuschließenden Rechner einen vorher festgelegten konstanten Strömungsdurchsatz entsprechende Frequenz anstehen muß, auf die der Rechner anspricht. Darüber hinaus soll ein Analogausgang für den Anschluß eines Zweikanal-Linienschreibers vorgesehen werden, der zeitgleich Flow- und Volumenkurven schreibt. Von der Problemstellung her, muß von einer bestimmten optimalen Sendefrequenz ausgegangen werden, so daß am digitalen Ausgang des Meßwertaufnehmers eine bestimmte Impulsfolge ansteht, die einem bestimmten konstanten Strömungsdurchsatz entspricht.

Diese Aufgabe wird erfindungsgemäß durch die im Kennzeichen des Anspruchs 1 angegebenen Merkmale gelöst. Weitere vorteilhafte Ausgestaltungen der Erfindung sind in den Unteransprüchen angegeben.

Die mit der Erfindung erzielten Vorteile bestehen insbesondere darin, daß die Schaltungsanordnung den Meßwertaufnehmer in weiten Grenzen an den nachgeschalteten Rechner anpaßbar macht und daß der ebenfalls nachgeschaltete Schreiber nur bei einem entsprechenden Signal aktiviert wird.

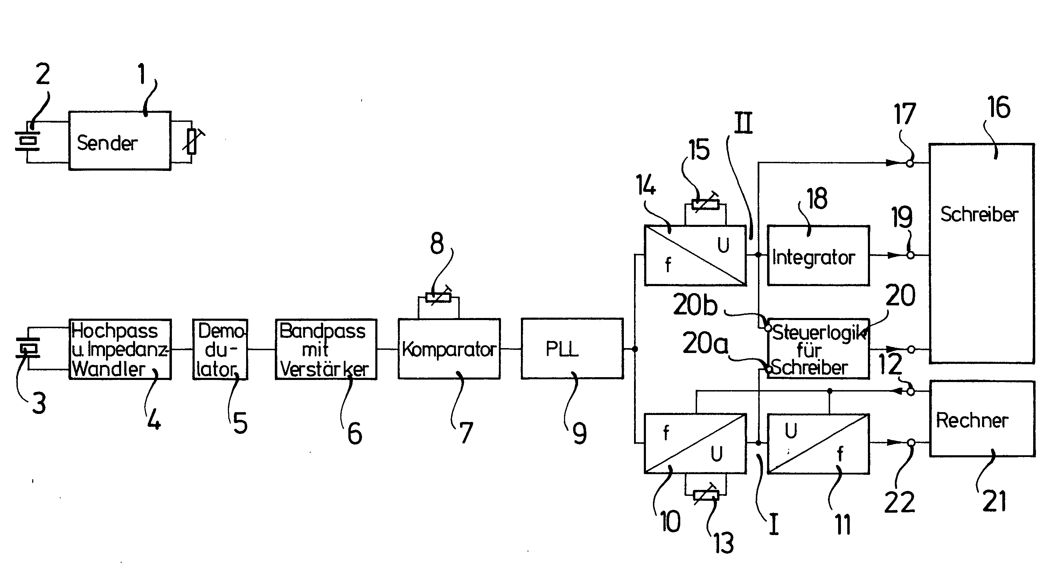

Anhand der einzigen Figur, die ein Blockschaltbild der erfindungsgemäßen Schaltungsanordnung zeigt, wird nachfolgend die Funktionsweise beschrieben.

Von einem Sender, bestehend aus einem Oszillator 1 und aus einem piezoelektrischen Wandler 2, wird ein amplituden- und frequenzkonstantes Signal gesendet, wobei der Oszillator 1 auf der Resonanzfrequenz des an den Oszillator angeschlossenen piezoelektrischen Wandlers 2 schwingt.

Die Wirbel des strömenden Mediums, die durch die Karmansche Wirbelstraße erzeugt werden, bewirken eine Amplitudenmodulation der Sendefrequenz. Das Frequenzspektrum, welches von der Strömungsgeschwindigkeit des strömenden Mediums abhängt, liegt im Niederfrequenzbereich. Um ein günstiges Tastverhältnis zu erreichen, muß die Sendefrequenz deutlich höher als das niederfrequente Frequenzspektrum liegen.

Um eine Leistungsanpaßung zu erzielen, muß ein als Empfänger dienender weiterer piezoelektrischer Wandler 3 auf der Resonanzfrequenz in Höhe des Ultraschallsignals schwingen.

Das hochohmige Eingangssignal durchläuft vom Empfänger 3 kommend einen Impedanzwandler 4, der die Aufgabe hat, den « Empfänger-Quarz » des Empfängers 3 an einen Demodulator 5 anzupassen. Der Demodulator 5 demoduliert das modulierte Sendesignal, so daß das durch die Wirbel erzeugte niederfrequente Frequenzspektrum gewonnen wird.

Am Ausgang des Demodulators 5 erscheinen die niederfrequenten Modulationsschwingungen, deren Frequenz die Meßgröße enthält. Da der Modulationsgrad von der Geschwindigkeit des strömenden Mediums abhängt, durchläuft die demodulierte Niederfrequenz einen Verstärker 6 mit Bandpaß, wobei der Bandpaß zur bevorzugten Verstärkung des auswertbaren Niederfrequenz-Bereichs und zur Unterdrückung der Trägerfrequenzreste dient.

Die verstärkte Amplitude wird einem Komparator 7 zugeführt, der einerseits auftretende Störsignale (z. B. Verstärkerrauschen) unterdrückt und andererseits die am Eingang des Komparators ankommenden niederfrequenten sinusförmigen Schwingungen in Rechteckimpulse umwandelt. Die Triggerschwelle des Komparators (7) ist über einen Potentiometer 8 einstellbar, so daß hiermit vorteilhaft die untere Ansprechschwelle der Geschwindigkeit des strömenden Mediums eingestellt werden kann.

Zur Aufbesserung des Tastverhältnisses der Rechteck-Impulse und zur Aussiebung eines Mittelwertes aus dem niederfrequenten Frequenzspektrum ist dem Komparator 7 eine PLL-Schaltung 9 (phase-locked-loop) nachgeschaltet.

Damit die Schaltung anpaßbar ist, wird die Frequenz bei einer bestimmten Geschwindigkeit des strömenden Mediums vorteilhaft in eine Spannung transformiert. Diese erfolgt durch eine hinter der PLL-Schaltung 9 geschaltete Frequenztransformations-Anordnung, bestehend aus einem Frequenz-Spannungs-Wandler 10 und einem Spannungs-Frequenz-Wandler 11.

Durch den Frequenz-Spannungs-Wandler 10 wird die Meßfrequenz in eine frequenzabhängige Gleichspannung umgewandelt und diese durch den Spannungs-Frequenz-Wandler 11 in eine Frequenz zurückverwandelt, die auf den geforderten Frequenzwert einstellbar ist, der am Eingang 22 des Rechners 21 in Form vom Rechteck-Impulsen anstehen soll. Diese Einstellung und somit die Anpassung des Meßwertaufnehmers 2, 3 an den Rechner 21 erfolgt durch einen weiteren Potentiometer 13, der die Ausgangsspannung des Frequenz-Spannungs-Wandlers 10 in weiten Grenzen variieren kann, um die geforderte Ausgangsfrequenz des Spannungs-Frequenz-Wandlers 11 zu erhalten.

Parallel zum Frequenz-Spannungs-Wandler 10 des Rechnerzweiges I ist ein weiterer Frequenz-Spannungs-Wandler 14 angeordnet, der einen Potentiometer 15 zum Einstellen der Ausgangsspannung aufweist. Die frequenzabhängige Ausgangsspannung ist jeweils an die Eingänge eines Zweikanallinienschreibers 16 angelegt, und zwar einmal direkt auf den Eingang 17 zur Aufzeichnung der Flow-Kurven und zum anderen über einen Integrator 18 auf den Eingang 19 zur Aufzeichnung der Volumenkurve. Durch diese Maßnahmen können nicht reproduzierbare Geschwindigkeits- und/oder Volumenprofile als Flow- und Volumenkurven vorteilhaft in einem Koordinatensystem aufgenommen werden.

Damit der Schreiber 16 nur dann startet, wenn von einem strömenden Medium verursachte Meßsignale anstehen, ist eine aus einem UND-Gatter bestehende Steuerlogik 20 vorgesehen, die zwischen dem Rechnerzweig I und dem Schreiberzweig II geschaltet ist. Der Schreiber 16 startet, wenn durch die Aktivierung des Rechners vom Frequenz-Spannungs-Wandler 10 des Rechnerzweiges I auf den einen Eingang 20a der Steuerlogik 20 und durch den Frequenz-Spannungs-Wandler 14 des Schreiberzweiges auf den anderen Eingang 20b der Steuerlogik 20 ein Meßsignal anliegt.

## Ansprüche

1. Elektronische Schaltungsanordnung für die Aufbereitung der aus der Wirbelfolge einer Karmanschen Wirbelstraße abgeleiteten Meßwerte mit

a) einem Sender (1) in Form eines Oszillators, der einen elektroakustischen Wandler (2) anregt,
b) einem Empfänger (3),
c) einem Demodulator (5) und einem Verstärker (6), die mit dem Empfänger in Reihe geschaltet sind sowie,
d) einer Auswertungsschaltung, die einen an den Ausgang des Verstärkers (6) angeschlossenen Komparator (7) mit einstellbarer Triggerschwelle zur Unterdrückung von Störsignalen und zur Umwandlung von sinusförmigen Eingangssignalen in Rechteckimpulse enthält, dadurch gekennzeichnet, daß die Auswertungsschaltung weiterhin folgende Bestandteile aufweist :

1. eine in Reihe an den Komparator (7) gelegte PLL-Schaltung (9) zur Aussiebung eines Mittelwertes aus dem niederfrequenten Frequenzspektrum des Ausgangssignals des Demodulators
2. einen einen Rechner enthaltenden Rechnerzweig (I) und einen einen Schreiber enthaltenden Schreiberzweig (II), die parallel zueinander an den Ausgang der PLL-Schaltung angeschlossen sind
3. eine im Rechnerzweig (I) in Reihe vor den Rechner (21) geschaltete einstellbare Frequenztransformationsanordnung, bestehend aus einem ersten einstellbaren Frequenz-Spannungs-Wandler (10) und aus einem Spannungs-Frequenz-Wandler (11)
4. eine im Schreiberzweig (II) vor den Schreiber (16) gelegte Reihenschaltung aus einem zweiten einstellbaren Frequenz-Spannungs-Wandler (14) und einem Integrator (18), sowie
5. eine zwischen dem Rechnerzweig (I) und dem Schreiberzweig (II) gelegte Steuerlogik (20), die nach Aktivierung des Rechners den Schreiber nur bei Erscheinen eines aus der Wirbelfolge der Karmanschen Wirbelstraße abgeleiteten Meßwerts startet.

2. Schaltungsanordnung nach Anspruch 1, dadurch gekennzeichnet, daß der Rechner- und der Schreiberzweig (I ; II) voneinander unabhängig durch den ersten (10) und zweiten (14) einstellbaren Frequenz-Spannungs-Wandler an eine einem vorher festgelegten konstanten Strömungsdurchsatz entsprechende Frequenz angepaßt sind.

3. Schaltungsanordnung nach Anspruch 1, dadurch gekennzeichnet, daß die Triggerschwelle des Komparators (7) über ein Potentiometer (8) einstellbar ist.

4. Schaltungsanordnung nach Anspruch 1 oder 2, dadurch gekennzeichnet, daß die Ausgangsspannung des ersten Frequenz-Spannungs-Wandlers (10) über ein Potentiometer (13) einstellbar ist.

5. Schaltungsanordnung nach Anspruch 1 oder 2, dadurch gekennzeichnet, daß die Ausgangsspannung des Zweiten Frequenz-Spannungs-Wandlers (14) über ein Potentiometer (15) einstellbar ist.

6. Schaltungsanordnung nach Anspruch 1, dadurch gekennzeichnet, daß die Steuerlogik (20) aus einem UND-Gatter besteht.

7. Schaltungsanordnung nach einem der Ansprüche 1 bis 6, dadurch gekennzeichnet, daß der Schreiber (16) ein Zweikanallinienschreiber ist, der gleichzeitig Fluß- und Volumenkurven in einem Koordinatensystem aufnimmt.

## Claims

1. An electronic circuit arrangement for processing the readings obtained from the succession of vortices of a Karman vortex path, comprising

a) an emitter (1) in the form of an oscillator which energises an electro-acoustic transducer (2),

b) a receiver (3),

c) a demodulator (5) and an amplifier (6) which are connected in series with the receiver, as well as

d) an evaluator circuit which incorporates a comparator (7) connected to the output of the amplifier (6) and having an adjustable trigger threshold for suppression of interference signals and for conversion of sinusoidal input-signals into rectangular pulses, characterised in that the evaluator circuit furthermore comprises the following components :

1. a PLL circuit (9) connected in series with the comparator (7), for filtering a mean value out of the low frequency spectrum of the output signal of the demodulator,

2. a calculator branch (I) containing a computer and a printer branch (II) containing a printer, which are connected to the output of the PLL circuit in parallel with each other,

3. a frequency transformer array, which is preconnected in series with the computer (21) in the calculator branch (I), is adjustable, and comprises a first adjustable frequency-voltage converter (10) and a voltage-frequency converter (11),

4. a series connection comprising a second adjustable frequency-voltage converter (14) and an integrator (18), preconnected to the printer (16) in the printer branch (II), as well as,

5. a control logic means (20) located between the computer branch (I) and the printer branch (II), which starts the printer after activation of the calculator only upon appearance of a reading derived from the succession of vortices of the Karman vortex path.

2. A circuit arrangement according to claim 1, characterised in that the computer and printer branches (I, II) are matched separately by means of the first (10) and second (14) adjustable frequency-voltage converters to a frequency corresponding to a previously determined constant flow throughput.

3. A circuit arrangement according to claim 1, characterised in that the trigger threshold of the comparator (7) is adjustable by means of a potentiometer (8).

4. A circuit arrangement according to claim 1 or 2, characterised in that the output voltage of the first frequency-voltage converter (10) is adjustable via a potentiometer (13).

5. A circuit arrangement according to claim 1 or 2, characterised in that the output voltage of the second frequency-voltage converter (14) is adjustable via a potentiometer (15).

6. A circuit arrangement according to claim 1, characterised in that the control logic means (20) comprises an AND gate.

7. A circuit arrangement according to one of the claims 1 to 6, characterised in that the printer (16) is a twin-channel line printer which simultaneously receives flow and volume graphs in a system of co-ordinates.

**Revendications**

1. Agencement de circuit électronique pour le traitement des valeurs de mesure obtenues à partir de la séquence de tourbillons d'une voie tourbillonnaire de Karman, comportant :

a) un émetteur (1) sous forme d'un oscillateur, qui excite un convertisseur électro-acoustique (2),

b) un récepteur (3),

c) un démodulateur (5) et un amplificateur (6), qui sont branchés en série avec le récepteur, et

d) un circuit d'interprétation, qui comporte un comparateur (7) relié à la sortie de l'amplificateur (6) et ayant un seuil de déclenchement réglagle pour éliminer des signaux parasites et pour convertir des signaux sinusoïdaux d'entrée en impulsions rectangulaires, caractérisé en ce que le circuit d'interprétation comprend en outre les composants suivants :

1. un circuit PLL (9) branché en série avec le comparateur (7) pour extraire une valeur moyenne du spectre de fréquences à basses fréquences du signal de sortie du démodulateur,

2. une dérivation de calculateur (I) contenant un calculateur et une dérivation d'enregistreur (II) contenant un enregistreur, qui sont reliés en parallèle l'une avec l'autre à la sortie du circuit PLL,

3. un dispositif de transformation de fréquence réglagle, branché dans la dérivation de calculateur (I) en série et en amont du calculateur (21) et se composant d'un premier convertisseur fréquence-tension réglable (10) et d'un convertisseur tension-fréquence (11),

4. un circuit-série placé dans la dérivation d'enregistreur (II) en amont de l'enregistreur (16) et se composant d'un second convertisseur fréquence-tension réglable (14) et d'un intégrateur (18), et

5. une logique de commande (20) placée entre la dérivation de calculateur (I) et la dérivation d'enregistreur (II) et qui enclenche, après activation du calculateur, l'enregistreur seulement lors de l'apparition d'une valeur de mesure dérivée de la séquence de tourbillons de la voie tourbillonnaire de Karman.

2. Agencement de circuit selon la revendication 1, caractérisé en ce que la dérivation de calculateur et la dérivation d'enregistreur (I ; II) sont adaptées indépendamment l'une de l'autre, par le premier (10) et le second (14) convertisseur fréquence-tension réglable, à une fréquence correspondant à un débit d'écoulement constant et

0 041 625

établi au préalable.

3. Agencement de circuit selon la revendication 1, caractérisé en ce que le seuil de déclenchement du comparateur (7) est réglable par l'intermédiaire d'un potentiomètre (8).

4. Agencement de circuit selon l'une des revendications 1 ou 2, caractérisé en ce que la tension de sortie du premier convertisseur fréquence-tension (10) est réglable par l'intermédiaire d'un potentiomètre (13).

5. Agencement de circuit selon l'une des revendications 1 ou 2, caractérisé en ce que la tension de sortie du second convertisseur fréquence-tension (14) est réglable par l'intermédiaire d'un potentiomètre (15).

6. Agencement de circuit selon la revendication 1, caractérisé en ce que la logique de commande (20) se compose d'une porte ET.

7. Agencement de circuit selon l'une des revendications 1 à 6, caractérisé en ce que l'enregistreur (16) est un enregistreur linéaire à deux canaux, qui produit simultanément des courbes d'écoulement et de volume dans un système de coordonnées.

**2** **1**
Sender

**3** Hochpass u. Impedanz-Wandler **4**

Demo-du-lator **5**

Bandpass mit Verstärker **6**

**8**
Komparator **7**

PLL **9**

**14** **15** II

f / U

**18**
Integrator

**20b**

**20a**
Steuerlogik für Schreiber **20**

**17**

**19**

**16**
Schreiber

**10** f / U **13** I

**11** U / f

**12**

**22**

**21**
Rechner

0 041 625